# FASCICULE DE BREVET EUROPEEN

(11) **EP 1 606 542 B1**
(45) Date de publication et mention de la délivrance du brevet: **07.05.2008**
(21) Numéro de dépôt: 04742383.5
(22) Date de dépôt: 26.03.2004
(51) Int. Cl.: F16K 31/08

(54) **SOUPAPE ACCOUPLEE MAGNETIQUEMENT**
MAGNETISCH GEKOPPELTES VENTIL
MAGNETICALLY-COUPLED VALVE

(30) Priorité: 27.03.2003 FR 0303784
(43) Date de publication de la demande: 21.12.2005
(73) Titulaire: SAMES Technologies, 38240 Meylan (FR)
(72) Inventeur: MERABET, Djamel, F-38320 Eybens (FR); PRUS, Eric, F-38000 Grenoble (FR); BALLU, Patrick, F-51100 Reims (FR)
(74) Mandataire: Myon, Gérard Jean-Pierre
(86) Numéro de dépôt international: PCT/FR2004/000779
(87) Numéro de publication internationale: WO 2004/090401

(56) Documents cités:
- EP-A- 0 997 676
- US-A- 6 092 545

## Description

L'invention a trait à une vanne magnétique et à une installation de projection de produit de revêtement comprenant, entre autres, une telle vanne.

Il est connu, par exemple de EP-A-0-997-676 ou de US-A-4,940,207, de réaliser une vanne dont le pointeau est entraîné par couplage magnétique à travers une cloison étanche, ce qui permet de séparer physiquement le produit transitant par la vanne des moyens de pilotage, sans utilisation de joint susceptible de se dégrader, notamment du fait d'une usure par abrasion et/ou corrosion. Dans les vannes connues, le pointeau est équipé d'aimants permanents destinés à coopérer avec des aimants permanents portés par un organe d'entraînement afin de constituer ensemble des moyens de couplage magnétique. Or, le montage d'aimants permanents sur le pointeau est une opération délicate qui requiert un soin particulier de nature à augmenter sensiblement le prix de revient d'une telle vanne. Les tolérances de fabrication et de mise en place des aimants permanents sont telles que l'entrefer entre le pointeau et l'organe d'entraînement associé doit être relativement important pour éviter des efforts de frottement rédhibitoires au bon fonctionnement de la vanne. Cet entrefer important diminue l'efficacité du couplage magnétique recherché. En outre, les aimants montés sur le pointeau sont susceptibles d'être attaqués par le fluide transitant par la vanne, d'où des risques de détérioration par abrasion et/ou corrosion pouvant résulter dans une diminution des performances d'une telle vanne.

C'est à ces inconvénients qu'entend plus particulièrement remédier l'invention, en proposant une vanne magnétique qui est plus économique et plus fiable que les vannes connues, alors que son fonctionnement est tout à fait sécurisé.

Dans cet esprit, l'invention concerne une vanne comprenant un corps à l'intérieur duquel est mobile un pointeau apte à venir en appui étanche contre un siège solidaire de ce corps, ce pointeau étant couplé magnétiquement, à travers une cloison étanche et amagnétique, avec un organe d'entraînement équipé de plusieurs aimants entre lesquels sont intercalés des corps magnétiques, caractérisé en ce que le pointeau est dépourvu d'aimants et équipé de nervures formées dans un matériau magnétique.

Grâce à l'invention, le matériau du pointeau constitue les pôles induits d'un dispositif de couplage magnétique dont les corps magnétiques forment les pôles inducteurs. Les tolérances de fabrication du pointeau permettent d'utiliser un entrefer plus mince que lorsque des aimants sont rapportés sur le pointeau. Le positionnement et la géométrie de ces nervures sont de préférence adaptés, en fonction du positionnement et de la géométrie des masses polaires constituées par les corps magnétiques. En particulier, l'épaisseur des nervures peut être sensiblement égale à l'épaisseur des corps magnétiques. De même, l'écartement relatif des nervures peut être sensiblement égal ou correspondre sensiblement à un multiple ou un sous-multiple de l'écartement relatif des corps magnétiques. La répartition et la géométrie des nervures du pointeau permettent une concentration du flux magnétique à leur niveau, d'où un couplage magnétique amélioré entre le pointeau et l'organe d'entraînement.

Selon des aspects avantageux, une vanne magnétique peut comprendre une ou plusieurs des caractéristiques suivantes prises dans toutes combinaisons techniquement réalisables :
- Le pointeau est recouvert d'une couche de matériau anti-corrosion ;
- Les nervures sont monobloc avec le corps du pointeau, ce qui est particulièrement économique et permet de les réaliser par usinage, avec une grande précision ;
- Le volume compris entre deux nervures adjacentes est garni d'un matériau de remplissage amagnétique, ce qui évite l'accumulation de produit transitant par la vanne, par exemple un produit de revêtement, entre deux nervures ;
- Les mouvements de l'organe d'entraînement peuvent être commandés pneumatiquement ou mécaniquement ;
- La cloison étanche est cylindrique, le pointeau étant disposé à l'intérieur de celle-ci, alors que l'organe d'entraînement est disposé autour de cette cloison. En variante, la cloison peut être globalement plane, alors que les nervures du pointeau et les corps magnétiques ou masse polaire de l'organe d'entraînement sont pourvus de moyens de guidage en translation du pointeau. Ces moyens de guidage peuvent inclure des zones de concentration de champ magnétique formées en regard les unes des autres, respectivement sur le pointeau et sur l'organe d'entraînement, par la création de cavités dans les surfaces en regard de ces nervures et de ces corps ;
- Un élément couplé magnétiquement à l'organe d'entraînement est disposé à l'extérieur du corps de la vanne et mobile entre deux positions dans lesquelles il indique respectivement l'état ouvert et l'état fermé de la vanne. Dans ce cas, ce corps peut être pourvu de deux marques correspondant respectivement aux états fermé et ouvert de la vanne, alors que l'élément précité est apte à masquer sélectivement l'une de ces marques en laissant l'autre marque apparente, ou vice-versa, en fonction de sa position telle que commandée par les mouvements de l'organe d'entraînement. On peut également prévoir qu'un capteur, disposé à l'extérieur de la vanne ou dans celle-ci, est apte à détecter les mouvements de cet élément et à fournir à un système de supervision un signal représentatif de l'état ouvert ou fermé de la vanne.

L'invention concerne également une installation de projection de produit de revêtement comprenant au moins un projecteur et au moins une source de produit de revêtement, caractérisée en ce qu'elle comprend au moins une vanne telle que précédemment décrite qui est disposée dans la ligne d'alimentation en produit de revêtement ou en produit de nettoyage de l'orifice de décharge du projecteur précité.

Une telle installation permet un contrôle efficace et fiable dans le temps des quantités de produit(s) de revêtement et/ou de produit(s) de nettoyage fournies à un projecteur. Dans une telle installation, une vanne conforme à l'invention peut également être utilisée en tant que régulateur de pression

Selon un aspect avantageux de l'invention, la vanne précitée peut être intégrée au projecteur auquel elle est associée, ce qui peut être rapproché de son caractère particulièrement compact.

L'invention sera mieux comprise et d'autres avantages de celle-ci apparaîtront plus clairement à la lumière de la description qui va suivre de sept modes de réalisation d'une vanne magnétique conforme à son principe et d'installations de projection de produit de revêtement comprenant de telles vannes, donnée uniquement à titre d'exemple et faite en référence aux dessins annexés dans lesquels :
- La figure 1 est une coupe longitudinale de principe d'une vanne en configuration fermée, conforme à un premier mode de réalisation de l'invention ;
- La figure 1A est une vue à plus grande échelle du détail A à la figure 1 lorsque le pointeau de la vanne est en cours de déplacement entre ses positions fermée et ouverte ;
- La figure 2 est une vue extérieure à plus petite échelle de la vanne de la figure 1 sur laquelle le plan de coupe de la figure 1 est repéré par la ligne I-I ;
- La figure 3 est une vue en perspective avec arrachement partiel de la vanne des figures 1, 1A et 2 ;
- La figure 4 est une coupe analogue à la figure 1 lorsque la vanne est en configuration ouverte ;
- La figure 5 est une vue extérieure analogue à la figure 2, la vanne étant dans la configuration de la figure 4 ;
- La figure 6 est une coupe longitudinale de principe d'une vanne conforme à un second mode de réalisation de l'invention ;
- La figure 7 est une coupe selon la ligne VII-VII à la figure 6 ;
- La figure 8 est une représentation schématique de principe d'un pistolet manuel de projection de produit de revêtement équipé d'une vanne conforme à l'invention ;
- La figure 9 est une vue analogue à la figure 8 pour un pistolet équipé d'une vanne conforme à un autre mode de réalisation de l'invention ;
- La figure 10 est une coupe schématique de principe d'une vanne conforme à l'invention utilisée en tant que raccord à pointeau piloté ;
- La figure 11 est une coupe schématique de principe d'une vanne conforme à l'invention utilisée en tant que robinet ;
- La figure 12 est une coupe analogue à la figure 11 pour une autre vanne utilisée également en tant que robinet ;
- La figure 13 est une représentation schématique de principe d'une installation de projection de produit de revêtement incorporant une vanne conforme à l'invention et
- la figure 14 est une vue analogue à la figure 13 pour une autre installation conforme à l'invention.

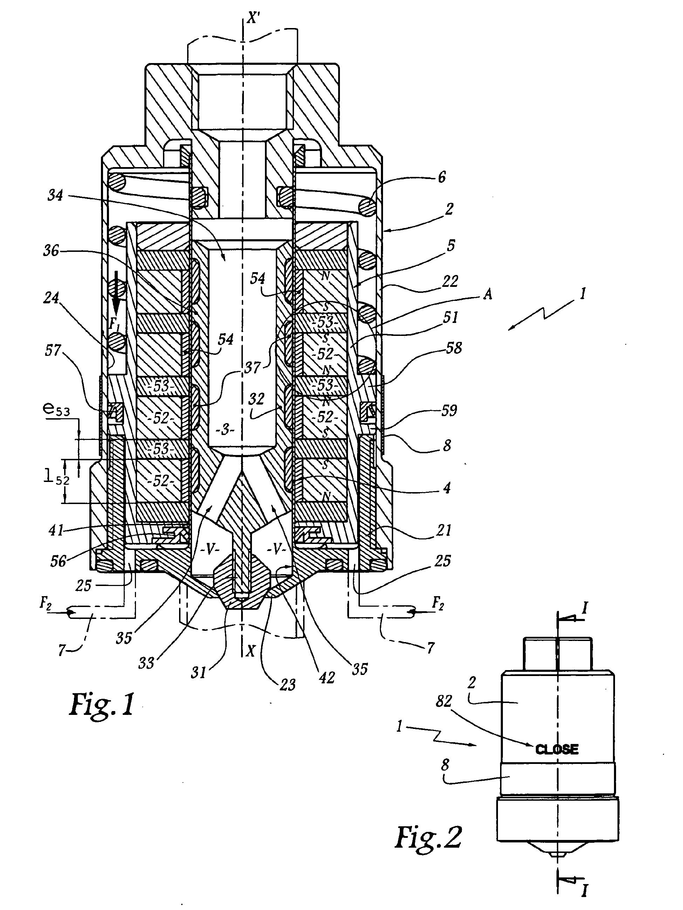

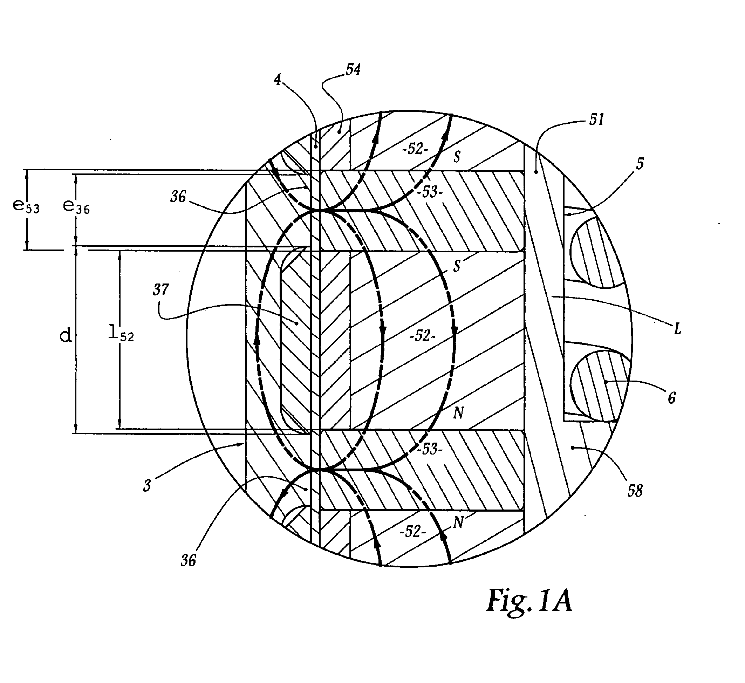

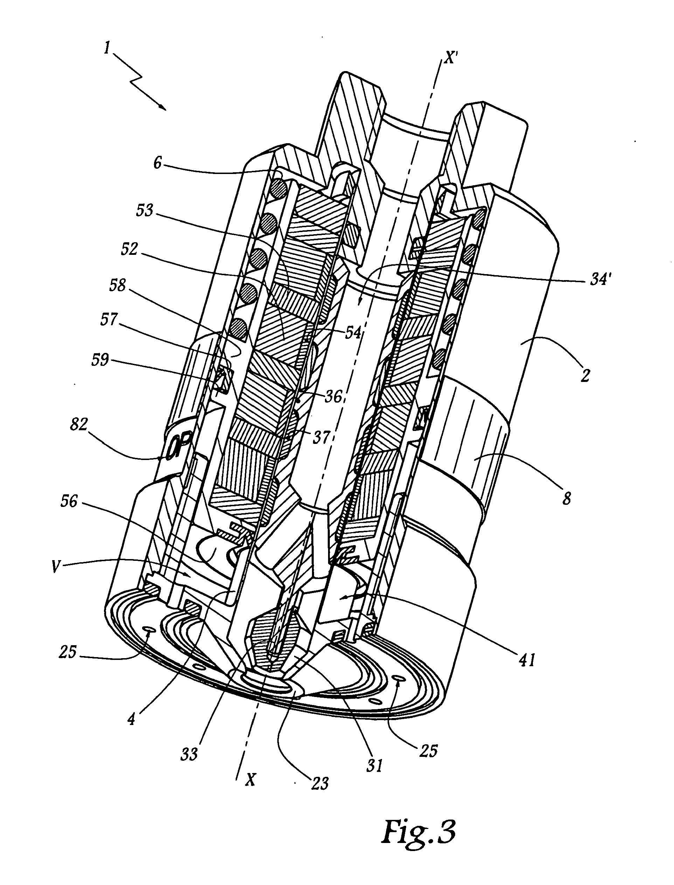

La vanne 1 représentée aux figures 1 à 5 comprend un corps bipartite 2 formé d'une base 21 et d'une coiffe 22 vissées l'une sur l'autre. La base 21 définit le siège 23 de la vanne 1 contre lequel vient en appui une tête 31 supportée par le corps principal 32 d'un pointeau mobile 3. En pratique, la tête 31 est vissée à l'extrémité d'une tige axiale 33 monobloc avec le corps 32.

Le corps 32 est pourvu d'un perçage central 34 à partir duquel divergent quatre conduits 35 qui relient le perçage 34 à un volume V situé autour de la tige 33 et de la tête 31 à l'intérieur du volume cylindrique à base circulaire défini par une cloison étanche et amagnétique 4.

La section transversale du pointeau 3 est telle que celui-ci peut coulisser dans le volume défini par la cloison 4 en étant guidé en translation. On note X-X' l'axe central commun aux éléments 3 et 4 qui correspond à la direction de coulissement du pointeau 3.

Un organe d'entraînement 5 est disposé à l'intérieur du corps 2 et autour de la cloison 4. Cet organe 5 comprend un corps 51 dans lequel sont montés plusieurs aimants permanents 52 entre lesquels sont disposés des corps magnétiques 53 constituant les masses polaires des aimants 52. Les aimants 52 sont annulaires et disposés autour de la cloison 4 qu'ils entourent donc, leurs polarités respectives étant inversées deux à deux ainsi qu'il ressort du repérage de leurs pôles Sud et Nord sur la droite de la figure 1. Les corps 53 sont également annulaires. En pratique, il peut s'agir de rondelles en acier.

Des masses polaires 53 sont également prévues de part et d'autre de l'empilement d'aimants portés par l'organe 5.

Des garnitures de protection 54 sont disposées entre les aimants 52 et la cloison 4, afin de protéger les aimants contre les risques d'usure par abrasion.

On note l₅₂ la largeur d'un aimant 52 prise parallèlement à l'axe X-X'. On note e₅₃ l'épaisseur d'un corps 53 mesuré parallèlement à l'axe X-X'.

L'organe 5 est également pourvu d'un joint à lèvres 56 configuré pour venir en appui contre la surface externe 41 de la cloison 4. Un second joint à lèvres 57 est également monté sur le corps 51 de l'organe 5 et vient en appui contre la surface interne 24 de la coiffe 22.

Par ailleurs, le corps 51 est pourvu d'une collerette radiale externe 58 sur laquelle vient en appui un ressort 6 qui exerce sur la collerette 58 un effort élastique F₁ dirigé vers la base 21.

Cette base est pourvue de deux orifices 25 qui peuvent être chacun connectés à un conduit 7 d'amenée d'un air de pilotage, comme représenté par les flèches F₂. L'air pénétrant dans le corps 2 à travers les orifices 25 permet de repousser l'organe 5 à l'encontre de l'effort F₁. En d'autres termes, la position de l'organe 5 le long de l'axe X-X' peut être piloté pneumatiquement par l'alimentation en air de conduit 7.

Ce déplacement contrôlé de l'organe 5 est utilisé pour piloter le déplacement du pointeau 3 et, plus particulièrement, de sa tête 31 par rapport au siège 23 du corps 2.

Pour ce faire, le corps 32 du pointeau 3 est pourvu de nervures 36 qui sont monobloc avec le corps 32 et qui sont avantageusement réalisées par usinage de sa surface radiale externe. Ces nervures 36 sont séparées l'une de l'autre par une distance d qui est sensiblement égale à la largeur l₅₂ des aimants 52. Par ailleurs, chaque nervure 36 a une épaisseur e₃₆, prise parallèlement à l'axe X-X', sensiblement égale à l'épaisseur e₅₃ des corps 53.

Ainsi, et comme représenté partiellement à la figure 1A, les nervures 36 peuvent être simultanément alignées avec les corps 53 de l'organe 5. Elles constituent les pôles induits des masses polaires 53.

Comme représenté à la figure 1A qui correspond à la configuration lorsque le pointeau 3 suit un déplacement imposé par l'organe 5 et lorsque l'alignement des éléments 36 et 53 n'est pas empêché par l'appui de la tête 31 sur le siège 23, les lignes L de champ magnétique créées par les aimants 52 passent par les éléments 53 et 36, ce qui correspond à une position d'équilibre des efforts magnétiques.

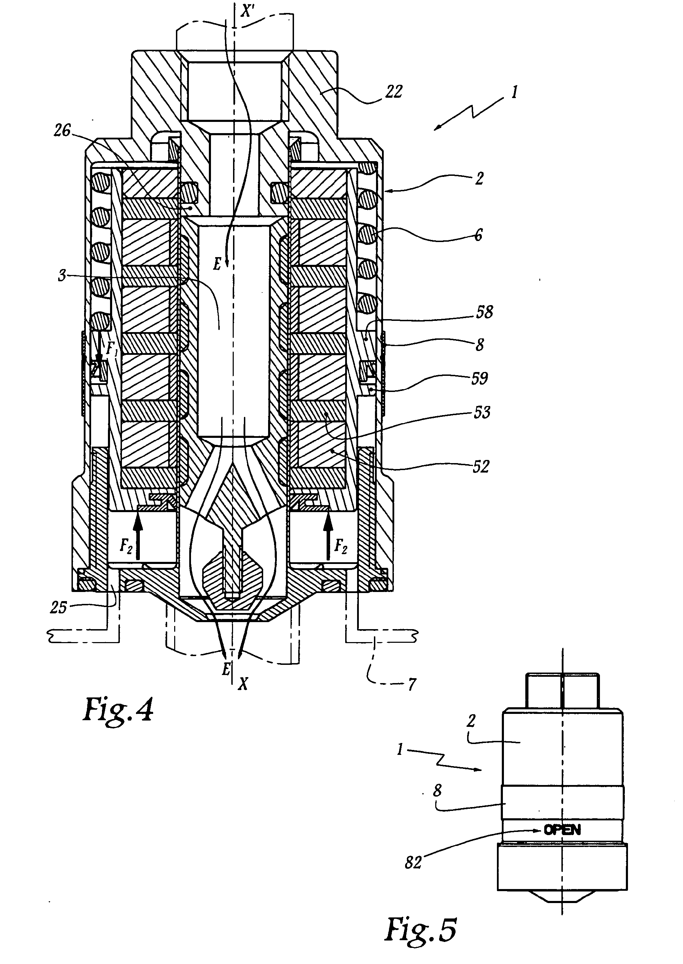

Lorsque l'organe 5 est éloigné de la base 21 sous l'effet d'une alimentation en air du corps 2 à travers les orifices 25, les corps 53 se déplacent vers le haut à la figure 1, de telle sorte que l'effort magnétique généré sur les nervures 36 déplace le corps 32 dans le même sens pour atteindre la position représentée à la figure 4 ou le pointeau 3 est en appui contre une partie 26 de la coiffe 22 qui pénètre dans le volume intérieur défini par la cloison 4. Ainsi, dans cette position, le pointeau est stable car il est en butée contre la partie 26, à la différence du pointeau de la vanne connue de EP-A-0 997 676.

Dans la configuration de la figure 4, les corps 53 et les nervures 36 ne sont pas alignés, car l'organe 5 a effectué une sur-course par rapport au déplacement du pointeau 3.

De même, dans la configuration de la figure 1, la course du pointeau 3 est limitée par l'appui de la tête 31 contre le siège 23, alors que celle de l'organe 5 peut se poursuivre sous l'effet de l'effort élastique F₁, auquel cas les éléments 53 et 36 ne sont pas alignés.

Des bagues de garnitures 37 sont disposées autour du corps 32 dans les rainures séparant deux nervures 36 adjacentes, ces bagues sont réalisées dans un matériau amagnétique qui peut être choisi en fonction de son coefficient de frottement sur la surface interne 42 de la cloison 4.

Les nervures 36 étant formées par usinage, leur géométrie peut être définie avec une très grande précision, de sorte que les tolérances de fabrication du pointeau 3 peuvent être faibles, ce qui permet d'envisager un entrefer peu épais entre les éléments 53 et 36, d'où un couplage magnétique efficace entre l'organe 5 et le pointeau 3.

Pour éviter les risques d'oxydation des nervures 36, le pointeau 3 est revêtu, au moins au niveau de ses nervures, d'une couche de matériau anti-corrosion, tel que du chrome déposé électrolytiquement.

Comme le pointeau 3 est dépourvu d'aimant, les aimants de la vanne 1 ne risquent pas d'être souillés par le produit transitant par celle-ci, quand bien même ce produit viendrait à se propager dans l'intervalle compris entre la surface radiale externe du pointeau 3 et la surface 42. Les aimants 52 sont protégés des produits transitant par la vanne 1 grâce à la cloison 4

On note qu'aucun ressort ne doit être prévu dans une zone susceptible d'être atteinte par le produit transitant par la vanne, un tel produit pouvant être corrosif ou chimiquement agressif.

Une bague témoin 8 réalisée dans un matériau magnétique est montée à l'extérieur de la coiffe 22 en pouvant coulisser autour de cette coiffe parallèlement à l'axe X-X'. Un couplage magnétique est obtenu, à travers la coiffe 22 qui est amagnétique, entre l'organe 5 et la bague 8. La géométrie de la collerette 58 associée à une seconde collerette 59 peut être choisie pour favoriser ce couplage. Ainsi, la bague 8 peut coulisser autour du corps 2 en fonction de la position de l'organe 5. Deux inscriptions 81 et 82 sont respectivement prévues sur l'extérieur de la coiffe 22 et sont prévues pour être sélectivement masquées par la bague 8. Plus précisément, la bague 8 masque l'inscription 82 qui signifie « ouvert » lorsque la vanne est fermée, comme représentée à la figure 2. L'inscription 81 qui signifie « fermé » est alors visible. Une personne regardant la vanne 1 peut ainsi lire l'inscription 81 et savoir que cette vanne est fermée.

A l'inverse, dans la configuration des figures 4 et 5, la bague 8 masque l'inscription 81 et laisse apparaître l'inscription 82, auquel cas une personne qui regarde la vanne 1 sait que celle-ci est dans une configuration ouverte.

Selon une variante non représentée de l'invention, les mouvements de la bague 8 peuvent être détectés par un capteur de tout type connu, ce capteur permettant de délivrer à un superviseur un signal fonction de l'état ouvert ou fermé de la vanne. Le capteur peut, par exemple, être inductif, électrique, optique ou pneumatique.

La cloison 4 peut être à base autre que circulaire, auquel cas la géométrie des pièces en mouvement est adaptée.

Dans la configuration des figures 4 et 5, les flèches E représentent l'écoulement d'un produit tel qu'un produit de revêtement à travers la vanne 1.

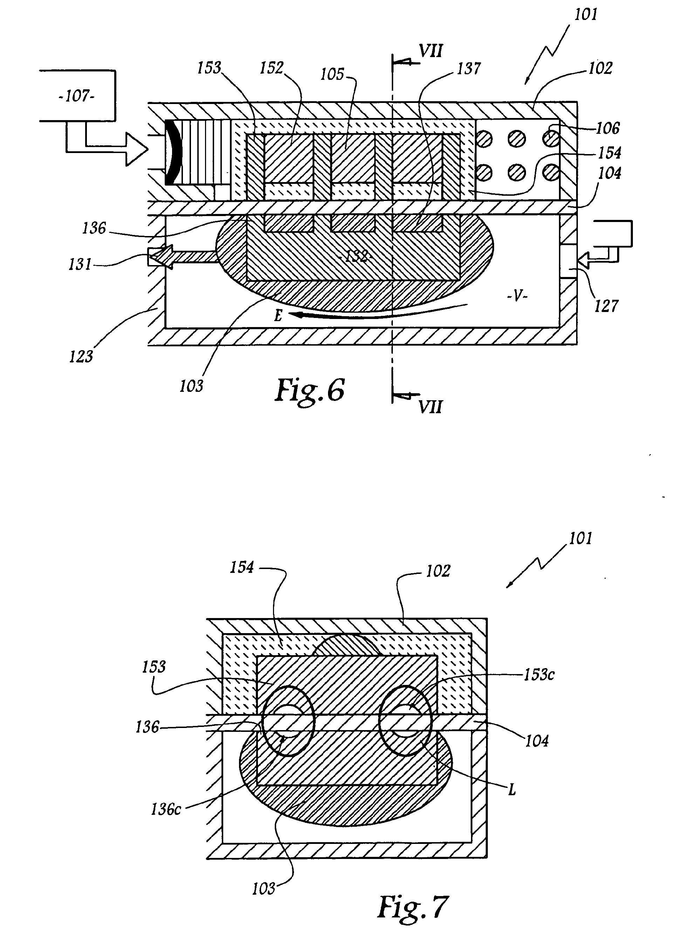

Dans le second mode de réalisation de l'invention représenté aux figures 6 et 7, les éléments analogues à ceux du premier mode de réalisation portent des références identiques augmentées de 100. La vanne 101 de ce mode de réalisation comprend un corps 102 dont le volume interne est séparé en deux parties par une cloison 104 étanche, globalement plane et amagnétique. Un pointeau 103 est disposé dans le corps 102, d'un côté de la cloison 104 à l'intérieur d'un volume V connecté par un orifice 127 à une alimentation en produit de revêtement. Le pointeau 103 porte une tête 131 destinée à venir sélectivement en appui contre un siège 123 formé par le corps 102.

Un organe d'entraînement 105 est prévu dans le corps 102, de l'autre côté de la cloison 104 par rapport au pointeau 103, et est soumis à l'action d'un ressort 106 et d'une source d'air de pilotage 107. La flèche E à la figure 6 représente le trajet d'écoulement d'un produit de revêtement lorsque la vanne est ouverte.

Comme précédemment, l'organe 105 porte des aimants 152 entre lesquels sont disposés des corps magnétiques 153. Le corps principal 132 du pointeau 103 est, quant à lui, pourvu de nervures 136 qui sont monobloc avec ce corps et ont une épaisseur et un écartement sensiblement égaux à l'épaisseur et à l'écartement des corps magnétiques 153.

Des bandes de garniture 137 sont prévues entre les nervures 136, de même que des bandes de garnitures 154 sont prévues entre les corps 53, ces bandes 154 recouvrant des aimants 152.

Comme il ressort plus particulièrement de la figure 7, des cavités 136c sont prévues dans les nervures 136, alors que des cavités de formes correspondantes 153c sont prévues dans les corps 153. Ces cavités permettent de concentrer les lignes L du champ magnétique autour d'elles, ce qui permet de rappeler en alignement le pointeau 103 par rapport .à l'organe 105. En d'autres termes, on utilise les effets de bord du champ magnétique pour guider en translation le pointeau 103.

En variante, le guidage du pointeau 103 en translation peut être obtenu par des reliefs, notamment des gorges ou des nervures prévues longitudinalement sur la cloison 104 et/ou sur la surface interne du corps 102.

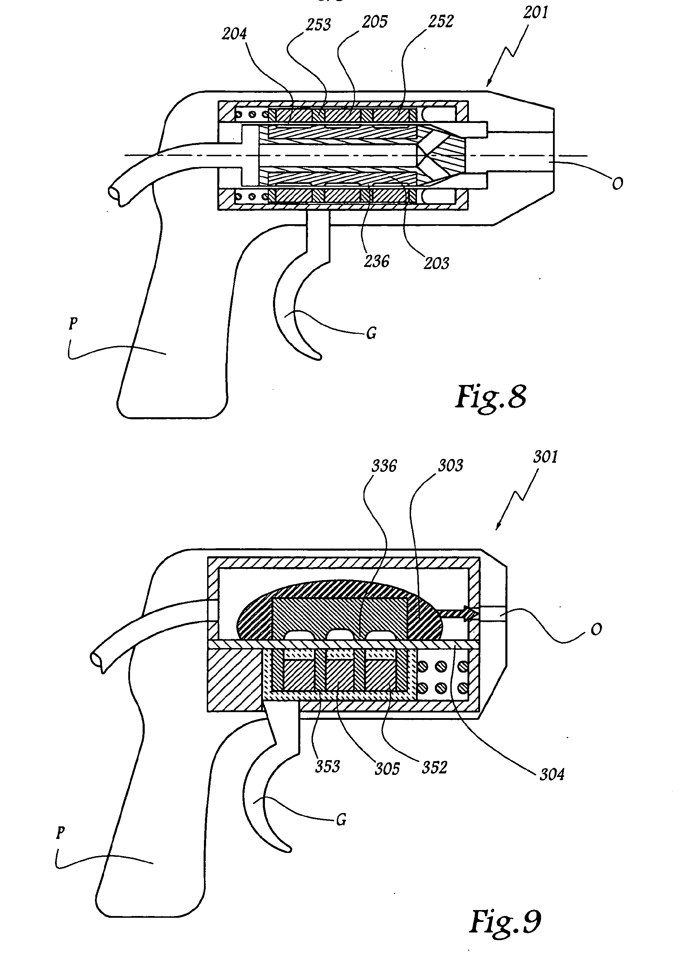

Comme il ressort de la figure 8, une vanne 201 conforme à l'invention peut être intégrée dans un pistolet P de projection de produit de revêtement. Dans ce cas, il s'agit d'une vanne dont le pointeau 203 est sensiblement circulaire et disposée à l'intérieur d'un volume défini par une cloison 204 étanche et amagnétique autour de laquelle est disposé un organe d'entraînement 205.

Comme représenté à la figure 9, un pistolet P peut également comprendre une vanne 301 du type de celle décrite en référence aux figures 6 et 7, avec une cloison 304 étanche, amagnétique et plane.

Dans les deux cas des figures 8 et 9, la gâchette G du pistolet P est reliée mécaniquement à l'organe d'entraînement 205 ou 305 de la vanne 201 ou 301, ce qui permet de contrôler les mouvements du pointeau 203 ou 303 associés et, l'alimentation des orifices de décharge O des pistolets P. Comme précédemment, les pointeaux 203 et 303 sont dépourvus d'aimants et pourvus de nervures 236 et 336 dont la géométrie et la position leur permet de constituer les pôles induits d'un ensemble d'aimants 252 et 352 et de masses polaires 253 et 353.

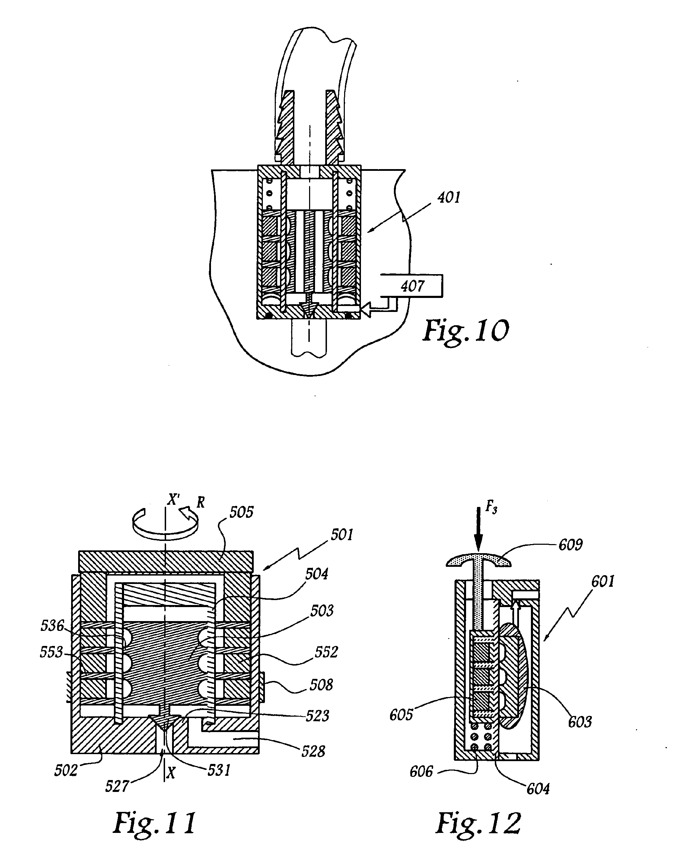

Comme représenté à la figure 10, une vanne 401 conforme à l'invention peut être utilisée comme raccord à pointeau piloté par une source extérieure 407.

La figure 11 montre une vanne 501 conforme à l'invention qui est destinée à être alimentée par un orifice 527 ménagé dans son boîtier 502 et dont le débouché forme un siège 523 d'appui pour une tête 531 portée par un pointeau 503 pourvu de nervures 536 destinées à participer au couplage magnétique de ce pointeau 503, à travers une cloison étanche et amagnétique 504, avec un organe d'entraînement 505 pourvu d'aimants 552 entre lesquels sont disposés des corps magnétiques 553 formant masses polaires pour les aimants 552.

Le contrôle de la position de l'organe 505 est effectué en vissant ou en dévissant l'organe 505 à l'intérieur du boîtier 502, ce qui est représenté par la flèche R. Ce mouvement de vissage ou de dévissage permet de déplacer l'organe 505 parallèlement à un axe central X-X' de la vanne 501 et de déplacer en translation correspondante le pointeau 503 et sa tête 531. Il est ainsi possible de libérer le passage pour l'écoulement de produit de revêtement entre l'orifice 527 et un orifice de sortie 528 de la vanne.

La vanne 501 peut ici être considérée comme un robinet.

Une bague 508 du type de la bague 8 du premier mode de réalisation peut être montée à l'extérieur du boîtier 502 et couplée magnétiquement à l'organe 505 pour indiquer la position de l'organe 505 et du pointeau 503. Cette bague 508 est mobile entre deux positions extrêmes et peut prendre diverses positions intermédiaires en fonction du degré d'ouverture de la vanne 501. Une graduation peut être prévue sur le boîtier 502 pour faciliter le repérage de la position de la bague 508.

La vanne 601 représentée à la figure 12 peut également être considérée comme un robinet dont le pointeau 603, la cloison étanche 604 et l'organe d'entraînement 605 sont voisins de ceux représentés aux figures 6 et 7. Dans ce mode de réalisation, l'organe 605 est solidaire d'un poussoir 609 sur lequel un utilisateur peut exercer un effort F₃ qui permet de déplacer le poussoir 605 et le pointeau 603 à l'encontre d'un effort de rappel généré par un ressort 606. La vanne 605 est un robinet manoeuvrable par une simple pression.

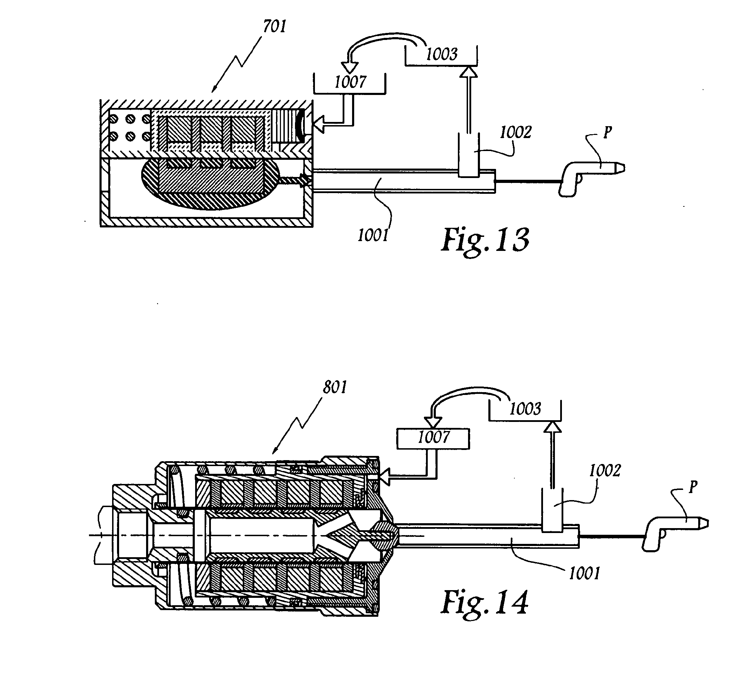

Comme représenté à la figure 13, une vanne 701 conforme au second mode de réalisation décrit ci-dessus peut être intégrée dans une ligne 1001 d'alimentation en produit de revêtement d'un projecteur P de produit de revêtement qui peut être de tout type connu, électrostatique ou non, manuel ou automatique. Un capteur de débit 1002 ou de pression est raccordé à une unité de régulation 1003 qui commande une source 1007 d'alimentation en air comprimé de la vanne 701.

Comme représenté à la figure 14, une vanne 801 conforme au premier mode de réalisation peut également être utilisée dans une installation comprenant une ligne 1001, un capteur 1002, une unité de régulation 1003 et une source d'air sous pression 1007.

L'invention a été représentée avec des vannes magnétiques de type deux voies. Elle est cependant applicable à des vannes de type trois voies moyennant des modifications à la portée de l'homme du métier.

L'invention est indépendante du nombre exact d'aimants portés par l'organe d'entraînement. En fait, ce nombre est choisi en fonction de l'intensité de l'effort de couplage recherché.

En outre, selon une variante non représentée de l'invention, l'écartement relatif d des nervures 36 et équivalentes peut être choisi égal à un sous-multiple de la largeur l₅₂ des aimants 52. En effet, dans ce cas, un alignement de certaines nervures 36 ou équivalentes avec les autres corps 53 et équivalents demeure possible, certaines autres nervures 36 se trouvant alors en regard des aimants 52. Ces autres nervures 36 ne sont alors pas fonctionnelles pour le couplage magnétique recherché. Ceci est applicable à tous les modes de réalisation envisagés.

Selon une autre variante non représentée de l'invention, l'écartement d peut être égal à un multiple de la largeur l₅₂, c'est-à-dire de l'écartement entre les corps 53. Dans ce cas, certains corps 53 sont en regard d'une bague 37. Ceci peut être appliqué à tous les modes de réalisation envisagés.

Les caractéristiques techniques des différents modes de réalisation décrits ci-dessus peuvent être combinées entre elles dans le cadre de la présente invention.

## Revendications

1. Vanne comprenant un corps à l'intérieur duquel est mobile un pointeau, apte à venir en appui étanche contre un siège solidaire dudit corps, ledit pointeau étant couplé magnétiquement, à travers une cloison étanche et amagnétique, avec un organe d'entraînement équipé de plusieurs aimants entre lesquels sont intercalés des corps magnétiques, **caractérisée en ce que** ledit pointeau (3 ; 103 ; 203 ; 303 ; 503 ; 603) est dépourvu d'aimants et équipé de nervures (36 ; 136 ; 236 ; 336 ; 536) formées dans un matériau magnétique.

2. Vanne selon la revendication 1, **caractérisée en ce que** l'épaisseur (e₃₆) desdites nervures (36 ; 136 ; 236 ; 336 ; 536) est sensiblement égale à l'épaisseur (e₅₃) desdits corps (53 ; 153 ; 253 ; 353 ; 553).

3. Vanne selon l'une des revendications 1 ou 2, **caractérisée en ce que** l'écartement relatif (d) desdites nervures (36 ; 136 ; 236 ; 336 ; 536) est sensiblement égal à, ou correspond sensiblement à un multiple ou un sous-multiple, de l'écartement relatif (l₅₂) desdits corps (35 ; 153 ; 253 ; 353 ; 553).

4. Vanne selon l'une des revendication 1 à 3, **caractérisée en ce que** lesdites nervures (36 ; 136 ; 236 ; 336 ; 536) sont monoblocs avec le corps (2 ; 102 ; 202 ; 302 ; 502) dudit pointeau (3 ; 103 ; 203 ; 503 ; 603).

5. Vanne selon l'une des revendications 1 à 4, **caractérisée en ce que** le volume compris entre deux nervures adjacentes (36 ; 136 ; 236 ; 336 ; 536) est garni d'un matériau de remplissage amagnétique (37 ; 137).

6. Vanne selon l'une des revendications 1 à 5, **caractérisée en ce que** ladite cloison (104 ; 304 ; 604) est globalement plane et **en ce que** lesdites nervures (136 ; 336) et lesdits corps (153 ; 353) sont pourvus de moyens (136c, 153c) de guidage en translation dudit pointeau (103).

7. Vanne selon la revendication 6, **caractérisée en ce que** lesdits moyens de guidage incluent des zones de concentration de champs magnétique (L) formées en regard les unes des autres, respectivement sur ledit pointeau (103) et sur ledit organe (105), par la création de cavités (136c, 153c) dans les surfaces en regard desdites nervures (136) et desdits corps (153).

8. Vanne selon l'une des revendications précédentes, **caractérisée en ce que** ledit pointeau (3 ; 103 ; 203 ; 303 ; 503 ; 603) est recouvert d'une couche de matériau anti-corrosion.

9. Vanne selon l'une des revendications précédentes, **caractérisée en ce que** les mouvements dudit organe d'entraînement (5 ; 105 ; 205 ; 305) sont commandés pneumatiquement (F₂)

10. Vanne selon l'une des revendications précédentes, **caractérisée en ce que** les mouvements dudit organe d'entraînement (505 ; 605) sont commandés mécaniquement (R, F₃).

11. Vanne selon l'une des revendications précédentes, **caractérisée en ce que** ladite cloison étanche (4 ; 204 ; 504) est cylindrique, ledit pointeau (3 ; 203 ; 503) étant disposé à l'intérieur de ladite cloison, alors que ledit organe d'entraînement (5 ; 205 ; 505) est disposé autour de ladite cloison.

12. Vanne selon l'une des revendications précédentes, **caractérisée en ce qu'**un élément (8 ; 508) couplé magnétiquement audit organe d'entraînement (5 ; 505) est disposé à l'extérieur dudit corps (2 ; 502) et mobile entre deux positions dans lesquels il indique respectivement l'état ouvert et l'état fermé de ladite vanne (1 ; 501).

13. Vanne selon la revendication 12, **caractérisée en ce que** ledit corps (2 ; 502) est pourvu de deux marques (81, 82) correspondant respectivement aux états fermé et ouvert de ladite vanne (1 ; 501), alors que ledit élément (8 ; 508) est apte à masquer sélectivement l'une desdites marques en laissant l'autre marque apparente, ou vice versa, en fonction de sa position commandée par les mouvements dudit organe d'entraînement (5 ; 505).

14. Vanne selon l'une des revendications 12 ou 13, **caractérisée en ce qu'**un capteur est apte à détecter les mouvements dudit élément (8 ; 508) et à fournir à un système de supervision un signal représentatif de l'état ouvert ou fermé de ladite vanne.

15. Installation de projection de produit de revêtement comprenant au moins un projecteur (P) et au moins une source de produit de revêtement, **caractérisée en ce qu'**elle comprend au moins une vanne (1 ; 101 ; 201 ; 301 ; 401 ; 501 ; 601 ; 701 ; 801) selon l'une des revendications précédentes, disposée dans la ligne (1001) d'alimentation en produit de revêtement ou en produit de nettoyage de l'orifice de décharge (O) dudit projecteur.

16. Installation selon la revendication 15, **caractérisée en ce que** ladite vanne (201 ; 301) est intégrée audit projecteur (P).

## Claims

1. Valve comprising a body, in the interior of which is a movable needle, capable of coming in sealed contact against a mounting which is formed as one piece with said body, said needle being connected magnetically by means of a sealed and non-magnetic partition, with an actuating element equipped with several magnets, interposed between which are magnetic bodies, **characterised in that** said needle (3; 103; 203; 303; 503; 603) is devoid of magnets and provided with ribs (36; 136; 236; 336; 536) formed of magnetic material.

2. Valve according to Claim 1, **characterised in that** the thickness (e36) of said ribs (36; 136; 236; 336; 536) is approximately equal to the thickness (e53) of said bodies (53; 153; 253; 353; 553).

3. Valve according to either of Claims 1 and 2, **characterised in that** the relative distance interval (d) of said ribs (36; 136; 236; 336; 536) is approximately equal to, or corresponds approximately to a multiple or sub-multiple, of the relative distance interval (l52 of said bodies (35; 153; 253; 353; 553).

4. Valve according to any one of Claims 1 to 3, **characterised in that** said ribs (36; 136; 236; 336; 536) are of one single piece with the body (2; 102; 202; 302; 502) of said needle (3; 103; 203; 503; 603).

5. Valve according to any one of Claims 1 to 4, **characterised in that** the space comprised between two adjacent ribs (36; 136; 236; 336; 536) is provided with a non-magnetic filling (37; 137).

6. Valve according to any one of Claims 1 to 5, **characterised in that** said partition (104; 304; 604) is flat overall and **in that** said ribs (136; 336) and said bodies (153; 353) are provided with means (136c, 153c) for guiding said needle (103) in relocation.

7. Valve according to Claim 6, **characterised in that** said guiding means include zones of concentration of magnetic field (L) formed opposite one another, respectively on said needle (103) and on said element (105), by the creation of cavities (136c, 153c) in the surfaces opposite said ribs (136) and said bodies (153).

8. Valve according to any one of the preceding claims, **characterised in that** said needle (3; 103; 203; 303; 503; 603) is covered with a layer of anti-corrosion material.

9. Valve according to any one of the preceding claims, **characterised in that** the movements of said actuating element (5; 105; 205; 305) are controlled pneumatically (F₂).

10. Valve according to any one of the preceding claims, **characterised in that** the movements of said actuating element (505; 605) are controlled mechanically (R, F₃).

11. Valve according to any one of the preceding claims, **characterised in that** said sealed partition (4; 204; 504) is cylindrical, said needle (3; 203; 503) being arranged in the interior of said partition, while said actuating element (5; 205; 505) is arranged around said partition.

12. Valve according to any one of the preceding claims, **characterised in that** an element (8; 508) connected magnetically to said actuating element (5; 505) is arranged on the outside of said body (2; 502) and moves between two positions in which it indicates respectively the open state and closed state of said valve (1; 501).

13. Valve according to Claim 12, **characterised in that** said body (2; 502) is provided with two marks (81, 82) corresponding respectively to the closed and open states of said valve (1; 501), while said element (8; 508) is capable of masking selectively one of said markings while leaving the other marking visible, or vice-versa, as a function of its position controlled by the movements of said actuating element (5; 505).

14. Valve according to either of Claims 12 and 13, **characterised in that** a sensor is capable of detecting the movements of said element (8; 508) and of providing a signal to a monitoring system representing the open or closed state of said valve.

15. Installation for the spraying of coating product, comprising at least one spray projector (P) and at least one source of coating product, **characterised in that** it comprises at least one valve (1; 101; 201; 301; 401; 501; 601; 701; 801) according to any one of the preceding claims, arranged in the supply line (1001) of coating product or product for cleaning the discharge aperture (O) of said spray projector.

16. Installation according to Claim 15, **characterised in that** said valve (201; 301) is integrated in said spray projector (P).

## Patentansprüche

1. Ventil, einen Körper umfassend, in dessen Innerem ein Ventilstift beweglich ist, der geeignet ist, in dichte Abstützung gegen einen mit dem Körper verbundenen Sitz zu kommen, wobei der Ventilstift magnetisch durch eine dichte und nicht magnetische Wand hindurch mit einem Antriebsorgan gekoppelt ist, das mit mehreren Magneten ausgerüstet ist, zwischen denen magnetische Körper angeordnet sind, **dadurch gekennzeichnet, dass** der Ventilstift (3; 103; 203; 303, 503; 603) ohne Magnete vorgesehen ist und mit Stegen (36; 136; 236; 336 ; 536) versehen ist, die in einem magnetischen Material ausgebildet sind.

2. Ventil nach Anspruch 1, **dadurch gekennzeichnet, dass** die Dicke (e₃₆) der Stege (36; 136; 236; 336; 536) im Wesentlichen gleich der Dicke (e₅₃) der Körper (53; 153; 253; 353; 553) ist.

3. Ventil nach einem der Ansprüche 1 oder 2, **dadurch gekennzeichnet, dass** der relative Abstand (d) der Stege (36; 136; 236; 336; 536) im Wesentlichen gleich oder im Wesentlichen entsprechend einem Vielfachen oder einem Unter-Vielfachen des relativen Abstandes (l₅₂) der Körper (35; 153; 253; 353; 553) beträgt.

4. Ventil nach einem der Ansprüche 1 bis 3, **dadurch gekennzeichnet, dass** die Stege (36; 136; 236; 336; 536) einstückig mit dem Körper (2; 102; 202; 302; 502) des Ventilstiftes (3; 103; 203; 503; 603) ausgebildet sind.

5. Ventil nach einem der Ansprüche 1 bis 4, **dadurch gekennzeichnet, dass** das zwischen zwei benachbarten Stegen (36; 136; 236; 336; 536) eingeschlossene Volumen mit einem nicht magnetischen Material (37; 137) gefüllt ist.

6. Ventil nach einem der Ansprüche 1 bis 5, **dadurch gekennzeichnet, dass** die Wand (104; 304; 604) im Ganzen gesehen eben ist und dass die Stege (136; 336) und die Körper (153; 353) mit Mitteln (136c, 153c) zur translatorischen Führung des Ventilstiftes (103) versehen sind.

7. Ventil nach Anspruch 6, **dadurch gekennzeichnet, dass** die Führungsmittel Zonen der Magnetfeldkonzentration (L) einschließen, die jeweils an dem Ventilstift (103) und an dem Organ (105) einander gegenüberstehend ausgebildet sind, durch die Erzeugung von Hohlräumen (136c; 153c) in den Flächen gegenüberstehend zu den Stegen (136) und den Körpern (153).

8. Ventil nach einem der vorhergehenden Ansprüche, **dadurch gekennzeichnet, dass** der Ventilstift (3; 103; 203; 303; 503; 603) mit einer Antikorrosionsschicht bedeckt ist.

9. Ventil nach einem der vorhergehenden Ansprüche, **dadurch gekennzeichnet, dass** die Bewegungen des Antriebsorgans (5; 105; 205; 305) pneumatisch (F₂) gesteuert werden.

10. Ventil nach einem der vorhergehenden Ansprüche, **dadurch gekennzeichnet, dass** die Bewegungen des Antriebsorgans (505; 605) mechanisch (R, F₃) gesteuert werden.

11. Ventil nach einem der vorhergehenden Ansprüche, **dadurch gekennzeichnet, dass** die dichte Wand (4; 204; 504) zylindrisch ist, wobei der Ventilstift (3, 203; 503) im Inneren der Wand angeordnet ist, während das Antriebsorgan (5; 205; 505) um die Wand herum angeordnet ist.

12. Ventil nach einem der vorhergehenden Ansprüche, **dadurch gekennzeichnet, dass** ein mit dem Antriebsorgan (5; 505) magnetisch gekoppeltes Element (8; 508) außerhalb des Körpers (2; 502) und beweglich zwischen zwei Positionen, in denen es jeweils den offenen Zustand und den geschlossenen Zustand des Ventils (1; 501) anzeigt, angeordnet ist.

13. Ventil nach Anspruch 12, **dadurch gekennzeichnet, dass** der Körper (2; 502) mit zwei Marken (81, 82) versehen ist, die jeweils dem geschlossenen und dem offenen Zustand des Ventils (1; 501) entsprechen, wobei das Element (8; 508) geeignet ist, abhängig von seiner von den Bewegungen des Antriebsorgans (5; 505) gesteuerten Position selektiv eine der Marken zu maskieren, unter Sichtbarlassung der anderen Marke oder vice versa.

14. Ventil nach einem der Ansprüche 12 oder 13, **dadurch gekennzeichnet, dass** ein Messaufnehmer geeignet ist, die Bewegungen des Elements (8; 508) zu detektieren und einem Überwachungssystem ein für den offenen oder geschlossenen Zustand des Ventils repräsentatives Signal zu liefern.

15. Sprühanlage für Beschichtungsprodukt, mindestens einen Projektor (P) und mindestens eine Quelle für Beschichtungsprodukt umfassend, **dadurch gekennzeichnet, dass** sie mindestens ein Ventil (1; 101; 201; 301; 401; 501; 601; 701; 801) nach einem der vorhergehenden Ansprüche umfasst, das in der Versorgungsleitung (1001) für Beschichtungsprodukt oder für Reinigungsprodukt der Ausstoßöffnung (O) des Projektors angeordnet ist.

16. Anlage nach Anspruch 15, **dadurch gekennzeichnet, dass** das Ventil (201; 301) in den Projektor (P) integriert ist.
